# EUROPÄISCHE PATENTSCHRIFT

(11) **EP 3 974 810 B1**
(45) Veröffentlichungstag und Bekanntmachung des Hinweises auf die Patenterteilung: **13.11.2024**
(21) Anmeldenummer: 21189053.8
(22) Anmeldetag: 02.08.2021
(51) Int. Cl.: G01N 21/27, G01N 21/35, A01D 41/12, A01D 43/08

(54) **NIR-SENSOR-KALIBRIERMETHODE**
NIR SENSOR CALIBRATION METHOD
PROCÉDÉ D'ÉTALONNAGE D'UN CAPTEUR NIR

(30) Priorität: 29.09.2020 DE 102020125422
(43) Veröffentlichungstag der Anmeldung: 30.03.2022
(73) Patentinhaber: CLAAS Selbstfahrende Erntemaschinen GmbH, 33428 Harsewinkel (DE)
(72) Erfinder: Stremlau, Björn, 49509 Recke (DE); Grove, Carsten, 48361 Beelen (DE); Roggenland, Michael, 59757 Arnsberg (DE); Claussen, Frank, 33428 Harsewinkel (DE); von Nordheim, Maximilian, 33619 Bielefeld (DE); Hagel, Jeremias, 48161 Münster (DE); Wesselmann, Jörg, 33428 Harsewinkel (DE)
(74) Vertreter: CLAAS Gruppe

(56) Entgegenhaltungen:
- EP-A1- 2 586 286
- DE-A1- 102004 048 103

## Beschreibung

Die vorliegende Erfindung betrifft die Erstellung von NIR-Sensor-Kalibrierungsmodellen und deren Verwendung in landwirtschaftlichen Arbeitsmaschinen nach dem Oberbegriff der Ansprüche 1 und 15.

NIR-Sensoren messen die Menge des von einer Probe durchgelassenen oder reflektierten Lichts im nahen Infrarotbereich. Organische Stoffe haben in diesem Spektralbereich im Allgemeinen strukturreiche Absorptions- bzw. Reflexionsspektren, die auf die Anregung von Vibrationsschwingungen von Bindungen zwischen Atomen in diesen Substanzen zurückzuführen sind. Es gibt in diesem Spektralbereich jedoch keine klar unterscheidbaren Linien, die einer bestimmten chemischen Verbindung zugeordnet werden könnten; vielmehr hat so gut wie jede organische Verbindung C-C-Bindungen und C-H-Bindungen, deren Linien infolge von Wechselwirkungen mit Nachbaratomen von einer Substanz zur anderen zwar geringfügig verschoben sein können, gleichzeitig aber auch so verbreitert sind, dass die Verschiebungen schwer zu identifizieren sind. So ist die Zahl der Freiheitsgrade, in denen die NIR-Spektren verschiedener Verbindungen sich voneinander unterscheiden können, im Allgemeinen wesentlich kleiner als die Zahl der Verbindungen, die in einer Probe enthalten sein können. Um aus einem NIR-Spektrum nützliche Information über die Zusammensetzung einer Probe ziehen zu können, müssen im Vorhinein weitreichende Annahmen über die Beschaffenheit der Probe gemacht werden, und die Richtigkeit dieser Annahmen bestimmt die Aussagekraft der aus dem Spektrum gewonnenen Informationen. In der Praxis bedeutet diese, dass, um durch Analyse eines NIR-Spektrums Angaben über wertbestimmende Bestandteile einer Getreideprobe machen zu können, Art und Sorte des Getreides sowie eventuell noch andere Einflussgrößen bekannt sein müssen, um ein für die Probe passendes Auswertungsmodell wählen zu können. Die Optimierung dieser Auswertungsmodelle ist Gegenstand intensiver Entwicklung. Anhand von verschiedenen Auswertungsmodellen gewonnene Ergebnisse sind nicht ohne weiteres miteinander vergleichbar.

Unter anderem aus der DE 10 2004 048 103 ist ein NIR-Sensorsystem bekannt geworden, welches Eigenschaften von Stoffströmen in einer landwirtschaftlichen Arbeitsmaschine spektroskopisch erfasst. Derartige Systeme haben zunächst den Vorteil, dass sie sehr präzise bestimmte Inhaltsstoffe eines Stoffstromes analysieren und deren Anteile am Gesamtstoffstrom bestimmen können. Damit dies möglich wird umfassen derartige NIR-Sensoriken Kalibrierungsmodelle, die je nach Art und Beschaffenheit des Stoffstromes und der zu ermittelnden Eigenschaften sehr unterschiedlich strukturiert sein müssen. Die Qualität dieser Kalibrierungsmodelle bestimmt maßgeblich die Qualität der Analyse des jeweiligen Stoffstromes. Daher ist es ein Bedürfnis, die Kalibrierungsmodelle so zu strukturieren, dass sie die Bestandteile des jeweiligen Stoffstroms mit hoher Qualität analysieren können. Hier haben die bekannten NIR-Sensorsysteme insbesondere den Nachteil, dass die Kalibrierungsmodelle nicht flexibel an sich ändernde Stoffeigenschaften und Einsatzbedingungen anpassbar sind.

Die D1 offenbart eine der landwirtschaftlichen Erntemaschine zugeordnete Messeinrichtung eine Kamera und ein Nahinfrarotspektrometer umfassend, wobei das Nahinfrarotspektrometer die Kornfeuchte ermittelt. Die so ermittelte Kornfeuchte wird mit Messwerten weiterer Messeinrichtungen verknüpft und sodann bei der Optimierung der Arbeitsweise des Mähdreschers berücksichtigt und hat insbesondere den Zweck vorausschauend auf dem Feld stehenden Erntegutbestand zu analysieren, um die Arbeitsorgane des Mähdreschers frühzeitig an die Eigenschaften des zu erntenden Gutes anzupassen. In Analogie zu DE 10 2004 048 103 sind derartige Verfahren nicht so beschaffen, dass sie das jeweils genutzte Kalibrierverfahren flexibel an sich ändernde Stoffeigenschaften und Einsatzbedingungen anpassen kann.

Es ist deshalb Aufgabe der Erfindung die beschriebenen Nachteile des Standes der Technik zu vermeiden und insbesondere Kalibrierverfahren zu schaffen, welche flexibel an sich ändernde Stoffeigenschaften und Einsatzbedingungen anpassbar sind.

Diese Aufgabe wird erfindungsgemäß durch ein Verfahren mit den kennzeichnenden Merkmalen des Anspruchs 1 und einer Vorrichtung mit den kennzeichnenden Merkmalen des Anspruchs 15 gelöst.

Indem die Datenbankstruktur nach Anspruch 1 in einer landwirtschaftlichen Arbeitsmaschine genutzt wird wird sichergestellt, dass ein Kalibrierverfahren geschaffen wird, welches flexibel an sich ändernde Stoffeigenschaften und Einsatzbedingungen anpassbar ist und letztlich eine genauere Messung von Stoffeigenschaften mittels NIR-Sensorik möglich wird.

In einer vorteilhaften Ausgestaltung der Erfindung stellt der Nutzer ein Kalibrierungsmodell zur Verfügung und die Datenbankstruktur erstellt unter Berücksichtigung der hinterlegten Rohdaten und/oder Kalibrierungsmodelle ein optimiertes Kalibrierungsmodell. Dies hat den Effekt, dass der Bediener beliebige von ihm genutzte Kalibrierungsmodelle mittels der Datenbankstruktur optimieren kann.

Zudem kann die Datenbankstruktur in einer weiteren vorteilhaften Ausgestaltung so beschaffen sein, dass der Nutzer einen Anwendungsfall definiert und die Datenbankstruktur unter Berücksichtigung zumindest der hinterlegten Kalibrierungsmodelle und Rohdaten ein nutzerspezifisches neues Kalibrierungsmodell generiert. Die hat den Effekt, dass der Bediener sich für beliebige Anwendungsfälle ein geeignetes Kalibrierungsmodell erstellen lassen kann ohne selbst über Expertenwissen auf diesem Gebiet zu verfügen.

Eine effiziente Nutzung eines erstellten Kalibrierungsmodells wird in einer vorteilhaften Ausgestaltung der Erfindung dann erreicht, wenn die Datenbankstruktur das erstellte Kalibrierungsmodell an den jeweiligen Nutzer übermittelt, vorzugsweise an das der jeweiligen landwirtschaftlichen Arbeitsmaschine zugeordnete NIR-Sensorsystem.

In einer vorteilhaften Weiterbildung der Erfindung kann der Nutzer das von der Datenbankstruktur erstellte Kalibrierungsmodell abrufen und an das jeweilige einer landwirtschaftlichen Arbeitsmaschine zugeordneten NIR-Sensorsystem übergeben. Dies hat insbesondere den Effekt, dass der Nutzer kontrolliert die in seiner landwirtschaftlichen Arbeitsmaschine hinterlegten Kalibrierungsmodelle austauschen kann.

Indem die Datenbankstruktur in einer weiteren vorteilhaften Ausgestaltung eingerichtet ist ein Kalibrierungsmodell derart zu modifizieren, dass für jeweils eine spezielle Fruchtart ein angepasstes Kalibrierungsmodell abgeleitet/erstellt wird wird erreicht, dass das NIR-Sensorsystem hochflexibel beliebigste Fruchtarten detektieren und analysieren kann.

In einer weiteren vorteilhaften Ausgestaltung der Erfindung ist die Datenbankstruktur eingerichtet ein angepasstes Kalibrierungsmodell unter Berücksichtigung geänderter Umgebungsbedingungen und/oder sich ändernder Fruchtarteigenschaften zu erstellen. Auch dies führt dazu, dass die NIR-Analyse eines zu detektieren Gutstroms verbessert wird.

Zudem kann die erfindungsgemäße Datenbankstruktur so beschaffen sein, dass die Rohdaten unterschiedlicher Einsatzzeiten miteinander verglichen werden können indem für alle Einsatzzeiten dasselbe Kalibrierungsmodell berücksichtigt wird. Dies hat den Effekt, dass ein normierter Vergleich der von dem NIR-Sensorsystem zu verschiedenen Zeiten generierten Daten möglich wird. In diesem Zusammenhang ist es von besonderem Vorteil, wenn die Einsatzzeit eine Kampagne umfasst und der Vergleich genutzt wird, abgeleitete Feldkarten zu korrigieren.

In einer vorteilhaften Weiterbildung der Erfindung umfasst die Datenbankstruktur einen sogenannten APDI-Modul, der eingerichtet ist unter Berücksichtigung des gewählten Kalibrierungsmodells und der zugehörigen Rohdaten Fehleingaben eines Bedieners zu erkennen und zu korrigieren. In diesem Zusammenhang ist es von besonderem Vorteil, wenn die Erkennung der Fehlbedienung auf die Eingabe der falschen Fruchtart gerichtet ist, da dies im praktischen Einsatz ein häufig vom Bediener falsch eingegebener Parameter ist.

Zudem kann die erfindungsgemäße Datenbankstruktur in einer weiteren vorteilhaften Ausgestaltung so beschaffen sein, dass der Nutzer ein Basiskalibrierungsmodell mittels der Datenbankstruktur in ein erweitertes Kalibrierungsmodell wandeln kann, wobei das erweiterte Kalibrierungsmodul dann Modellbestandteile umfasst, die das jeweilige NIR-Sensorsystem befähigen, ein erweitertes Spektrum an Inhaltstoffen zu ermitteln. Dies hat vor allem den Vorteil, dass der Nutzer eines Kalibrierungsmodells das Einsatzspektrum seines NIR-Sensorsystems erweitern kann. Dies ist insbesondere dann von großem Vorteil, wenn das jeweilige NIR-Sensorsystem in sogenannten Lohnunternehmen eingesetzt wird, die Kundenaufträge erfüllen und deren Kunden unterschiedlichste NIR-Daten benötigen, etwa die Zusammensetzung eines Güllestroms oder die Zusammensetzung eines von einem Feldhäcksler bearbeiteten Erntegutstroms oder die Zusammensetzung eines von einem Mähdrescher bearbeiteten Erntegutstroms, um nur einige Anwendungsfälle zu nennen.

Die Analysequalität der mit der erfindungsgemäßen Datenbankstruktur zu generierenden Kalibrierungsmodelle kann auch dadurch weiter verbessert werden, wenn in einer weiteren vorteilhaften Ausgestaltung die Datenbankstruktur eingerichtet ist stationär ermittelte Probenanalysewerte bei der Generierung des jeweiligen Kalibrierungsmodells zu berücksichtigen.

Für den Betreiber der erfindungsgemäßen Datenbankstruktur ergibt sich dann ein besonderer wirtschaftlicher Vorteil, wenn die Datenbankstruktur eingerichtet ist die Erstellung der nutzerspezifischen Kalibrierungsmodelle entgeltlich vorzunehmen, wobei der Nutzer in Abhängigkeit vom Umfang der Erstellung des jeweiligen Kalibrierungsmodells einmalig oder benutzungsabhängig ein Entgelt entrichtet. Für den Nutzer der generierten Kalibrierungsmodelle hat dies den Vorteil, dass er nur für Erstellung tatsächlich benötigter Kalibrierungsmodelle bezahlen muss.

Eine besonders effiziente Anwendung der erfindungsgemäßen Datenbankstruktur ergibt sich gemäß Anspruch 15 dann, wenn eine landwirtschaftliche Arbeitsmaschine ein NIR-Sensorsystem, das eingerichtet ist, um NIR-Spektren von Pflanzenmaterial oder sonstigen Stoffen zu erfassen und als Rohdaten auszugeben, und eine Auswerteeinheit zum Ableiten wenigstens eines Parameters des Pflanzenmaterials oder des sonstigen Stoffs in Echtzeit aus den Rohdaten umfasst und mittels einer Schnittstelle für den Datenverkehr mit wenigstens einer Datenverarbeitungseinheit außerhalb der landwirtschaftlichen Arbeitsmaschine Daten ausgetauscht werden können. Vorzugsweise umfasst die Datenverarbeitungseinheit eine Datenbankstruktur zur Erstellung von Kalibrierungsmodellen für ein NIR-Sensorsystem, wobei in der Datenbankstruktur Rohdaten der NIR-Spektren von Pflanzenmaterial oder sonstigen Stoffen abspeicherbar sind, wobei die Rohdaten von einem oder mehreren der landwirtschaftlichen Arbeitsmaschine zugeordneten NIR-Sensoren generiert werden. Zudem umfasst die Datenbankstruktur neben den Rohdaten zumindest ein oder mehrere Kalibrierungsmodelle und ist eingerichtet, nutzerspezifische Kalibrierungsmodelle unter Verwendung der hinterlegten Rohdaten und Kalibrierungsmodelle zu generieren und diese einem Nutzer verfügbar zu machen.

Indem das NIR-Sensorsystems die Rohdaten generiert und an die Datenbankstruktur überträgt, wobei das NIR-Sensorsystem einen oder mehrere Sensorköpfe umfasst und jedem Sensorkopf separate oder allen Sensorköpfen eine gemeinsame Auswerteinheit zugeordnet ist und die Auswerteinheit eine Sensorsoftware umfasst, wobei die vom Sensorkopf generierten Spektraldaten mittels der Sensorsoftware und dem oder den dieser Sensorsoftware zugeordneten Kalibrierungsmodellen in Sensordaten zur internen Nutzung in der landwirtschaftlichen Arbeitsmaschine und zu den Rohdaten weiterverarbeitet werden, wird sichergestellt, dass eine intensive interaktive Kommunikation zwischen einem NIR-Sensorsystem und der erfindungsgemäßen Datenbankstruktur möglich wird, die stets sicherstellt, dass das NIR-Sensorsystem eine qualitativ hochwertige NIR-Analyse eines Gutstromes erstellt.

Zudem wird eine hochflexible Kommunikation zwischen landwirtschaftlicher Arbeitsmaschine und der erfindungsgemäßen Datenbankstruktur dann möglich, wenn die in der jeweiligen Auswerteinheit generierten Rohdaten mittels einer Schnittstelle nach Extern übertragen werden, wobei die Datenübertragungsstrecken zwischen landwirtschaftlicher Arbeitsmaschine und Datenbankstruktur zumindest einen Satellit und/oder eine Funkanlage umfasst und die Datenbankstruktur in einer vorzugsweise als Datencloud oder stationärer Server ausgeführten Datenverarbeitungseinrichtung hinterlegt ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung einer landwirtschaftlichen Anwendung unter Nutzung der erfindungsgemäßen Datenbankstruktur
- Figur 2: eine Detailansicht der erfindungsgemäßen Datenbankstruktur
- Figur 3: eine schematische Darstellung der Interaktion eines Nutzers mit der Datenbankstruktur
- Figur 4: Ausgestaltungen der erfindungsgemäßen Datenbankstruktur
- Figur 5: eine weitere Ausgestaltungsvariante der erfindungsgemäßen Datenbankstruktur
- Figur 6: eine weitere Ausgestaltungsvariante der erfindungsgemäßen Datenbankstruktur

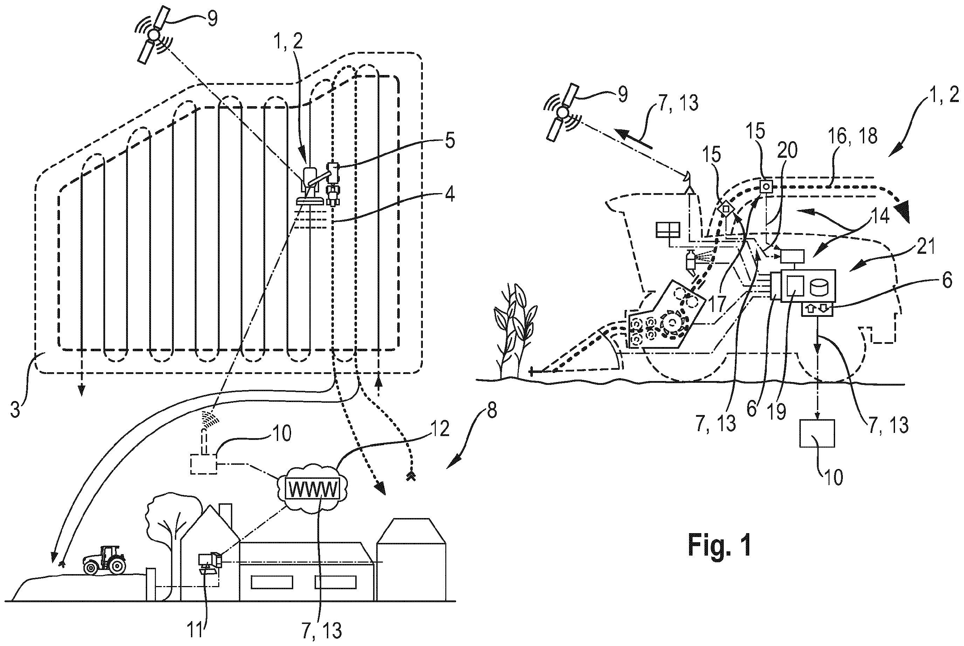

Figur 1 zeigt eine als Feldhäcksler 2 ausgeführte landwirtschaftliche Arbeitsmaschine 1, welche einen auf dem Feld 3 gewachsenen Pflanzenbestand 4, hier in der Regel Mais, aberntet und an ein Transportfahrzeug 5 übergibt. Der landwirtschaftlichen Arbeitsmaschine 1 ist eine noch näher zu beschreibende Schnittstelle 6 zugeordnet mittels derer Daten 7 von der landwirtschaftlichen Arbeitsmaschine 1 nach Extern 8 übertragen werden können. Die Datenübertragung nach Extern 8 kann dabei beispielsweise mittels Satellit 9 oder stationäre Funkanlagen 10 erfolgen, wobei die Daten 7 dabei entweder an stationäre Server 11 oder in eine sogenannten Cloud 12 übertragen werden. Die übertragenen Daten 7 umfassen dabei zumindest die erfindungsgemäßen und nachfolgend detailliert beschriebenen Rohdaten 13, generiert von zumindest einem der landwirtschaftlichen Arbeitsmaschine 1 zugeordneten NIR-Sensorsystem 14.

Im dargestellten Ausführungsbeispiel umfasst das der als Feldhäcksler 2 ausgeführten landwirtschaftlichen Arbeitsmaschine 1 zugeordnete NIR-Sensorsystem 14 zwei an sich bekannte und daher nicht näher beschriebene NIR-Sensorköpfe 15. Es liegt im Rahmen der Erfindung, dass die landwirtschaftliche Arbeitsmaschine 1 als beliebig gestaltet landwirtschaftliche Arbeitsmaschine ausgeführt sein kann, beispielhaft seien hier Erntemaschinen wie Mähdrescher und Spezialfruchterntemaschinen oder Güllefahrzeuge genannt. Zudem liegt es im Rahmen der Erfindung, dass der landwirtschaftlichen Arbeitsmaschine 1 nur ein NIR-Sensorkopf 15 oder eine Vielzahl von NIR-Sensorköpfen 15 zugeordnet sind. Der abgeerntete Pflanzenbestand 4 durchläuft den Feldhäcksler 2 als Gutstrom bestehend aus Pflanzenmaterial 16. Das Pflanzenmaterial 16 passiert auf seinem Weg durch den Feldhäcksler 2 den jeweiligen Sensierbereich 17 des oder der NIR-Sensorköpfe 15. Mittels Spektralanalyse werden in an sich bekannter Weise Spektraldaten 20 der zu identifizierenden Inhaltstoffe 18 von dem NIR-Sensorsystem 14 generiert. Neben den direkt detektierbaren Inhaltsstoffen etwa Protein, Fett, Zucker können beliebige Inhaltsstoffe 18 durch Anwendung geeigneter Kalibrierungsmodelle 19 ermittelt werden.

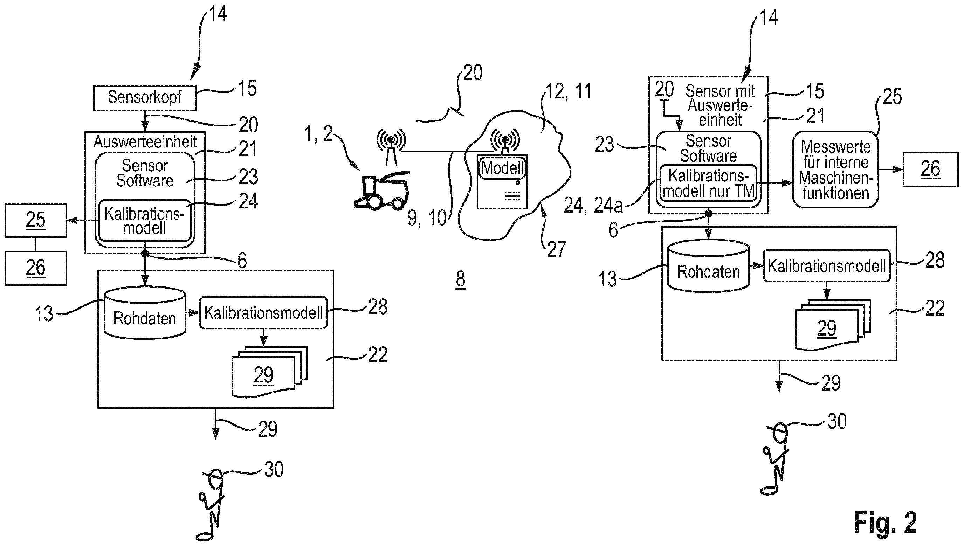

Die von den NIR-Sensoreköpfen 15 generierten Spektraldaten 20 werden an eine Auswerteinheit 21 übergeben, wobei die Auswerteinheit 21 entweder außerhalb des jeweiligen Sensorkopfes 15 gemäß Figur 1 in der landwirtschaftlichen Arbeitsmaschine 1 angeordnet oder gemäß Figur 2 direkt in den jeweiligen Sensorkopf 15 integriert ist. In noch näher zu beschreibender Weise werden in der jeweiligen Auswerteinheit 21 die erfindungsgemäßen Rohdaten 13 generiert und mittels der Schnittstelle 6 nach Extern 8, Satellit 9 und/oder Funkanlage 10, und von dort in eine Datencloud 12 und/oder an einen Server 11 übertragen.

Figur 2 zeigt nun schematisch die Generierung der Rohdaten 13 mittels des NIR-Sensorsystems 14 und deren Übertragung an die erfindungsgemäße Datenbankstruktur 22. Je nach Ausgestaltung umfasst der jeweilige Sensorkopf 15 eine im Sensorkopf 15 oder externe angeordnete Auswerteinheit 21. Die jeweilige Auswerteinheit 21 umfasst eine sogenannte Sensorsoftware 23. Die vom Sensorkopf 15 generierten Spektraldaten 20 werden mittels der Sensorsoftware 23 und dem oder den dieser Sensorsoftware 21 zugeordneten Kalibrierungsmodellen 24, in Figur 2 ist beispielhaft ein Kalibrierungsmodell Trockenmasse 24a genannt, in Sensordaten 25 zur internen Nutzung in der landwirtschaftlichen Arbeitsmaschine 1 und zu den erfindungsgemäßen Rohdaten 13 weiterverarbeitet. In an sich bekannter Weise werden die für die interne Nutzung generierten Sensordaten 25 herangezogen, um bestimmte Betriebsparameter 26 der landwirtschaftlichen Arbeitsmaschine 1 zu optimieren. Beispielhaft sei hier auf die bekannte Ermittlung des Trockenmasseanteils verwiesen, der am Feldhäcksler 2 letztlich bei der Einstellung der sogenannten Häcksellänge berücksichtigt wird, wobei die Häcksellänge dabei umso kürzer eingestellt wird je höher der Trockenmasseanteil im Pflanzenmaterial 16 ist.

Die in der jeweiligen Auswerteinheit 21 generierten Rohdaten 13 werden mittels der Schnittstelle 6 nach Extern 8 übertragen. Wie bereits beschrieben werden diese Rohdaten 6, erfindungsgemäß die unverarbeiteten Spektraldaten 20, mittels geeigneter Datenübertragungsstrecken, etwa Satellit 9 oder Funkanlagen 10, an die erfindungsgemäße Datenbankstruktur 22 übertragen, wobei besagte Datenbankstruktur 22 beispielsweise in einer Datencloud 12 oder einem stationären Server 11 gespeichert sein kann, wobei der Server 11 und/oder die Datencloud 12 die erfindungsgemäße externe Datenverarbeitungseinheit 27 bilden. In der erfindungsgemäßen Datenbankstruktur 22 sind neben den Rohdaten 13 zumindest ein oder mehrere Kalibrierungsmodelle 28 wiederaufrufbar hinterlegt. Die Datenbankstruktur 22 ist in noch näher zu beschreibender Weise eingerichtet, nutzerspezifische Kalibrierungsmodelle 29 unter Verwendung der hinterlegten Rohdaten 13 und Kalibrierungsmodelle 28 zu generieren und diese einem Nutzer 30 verfügbar zu machen, wobei der Nutzer 30 erfindungsgemäß jeweilige Steuer- und Regeleinrichtung einer landwirtschaftlichen Arbeitsmaschine 1 ist.

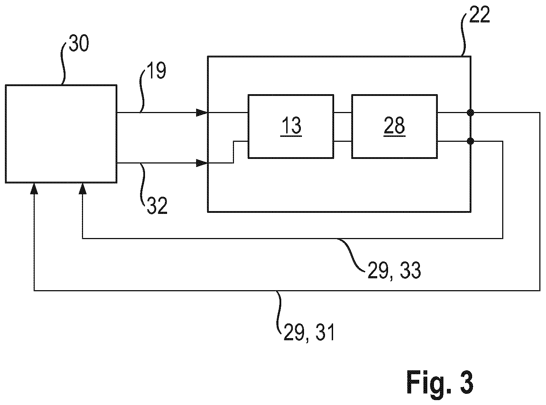

In einer ersten Ausgestaltung der Erfindung gemäß Figur 3 kann die Datenbankstruktur 22 so beschaffen sein, dass ein Nutzer 30 ein Kalibrierungsmodell 19 zur Verfügung stellt und die Datenbankstruktur 22 unter Berücksichtigung der hinterlegten Rohdaten 13 und/oder Kalibrierungsmodelle 28 ein nutzerspezifisches Kalibrierungsmodell 29 in Form eines optimierten Kalibrierungsmodells 31 erstellt und an den Nutzer 30 übergibt. Die Datenbankstruktur 22 kann aber auch so beschaffen sein, dass der Nutzer 30 einen Anwendungsfall 32 definiert und die Datenbankstruktur 22 unter Berücksichtigung zumindest der hinterlegten Kalibrierungsmodelle 28 und Rohdaten 13 ein nutzerspezifisches Kalibrierungsmodell 29 in Form eines neu erstellten Kalibrierungsmodells 33 generiert und an den Nutzer 30 übergibt. Die Datenbankstruktur 22 kann dabei so beschaffen sein, dass es die generierten nutzerspezifischen Kalibrierungsmodelle 29 entweder direkt an das jeweilige NIR-Sensorsystem 14 oder an einen sonstigen Nutzer 30, etwa den Bediener der landwirtschaftlichen Arbeitsmaschine 1 oder einen eine Maschinenflotte managenden Bediener übermittelt. In einer Ausgestaltung der Erfindung kann die Datenbankstruktur 22 auch so beschaffen sein, dass der Nutzer 30 das von der Datenbankstruktur 22 erstellte nutzerspezifische Kalibrierungsmodell 29 abruft und an das jeweilige einer landwirtschaftlichen Arbeitsmaschine 1 zugeordneten NIR-Sensorsystem 14 übergibt. Nach Übergabe des generierten nutzerspezifischen Kalibrierungsmodells 29 an das jeweilige NIR-Sensorsystem 14 wird das dort hinterlegte Kalibrierungsmodell 19 durch dieses neu geschaffene oder modifizierte nutzerspezifische Kalibrierungsmodell 29 ersetzt, sodass das NIR-Sensorsystem 14 nunmehr mit diesem neu geschaffenen oder modifizierten nutzerspezifischen Kalibrierungsmodell 29 arbeitet.

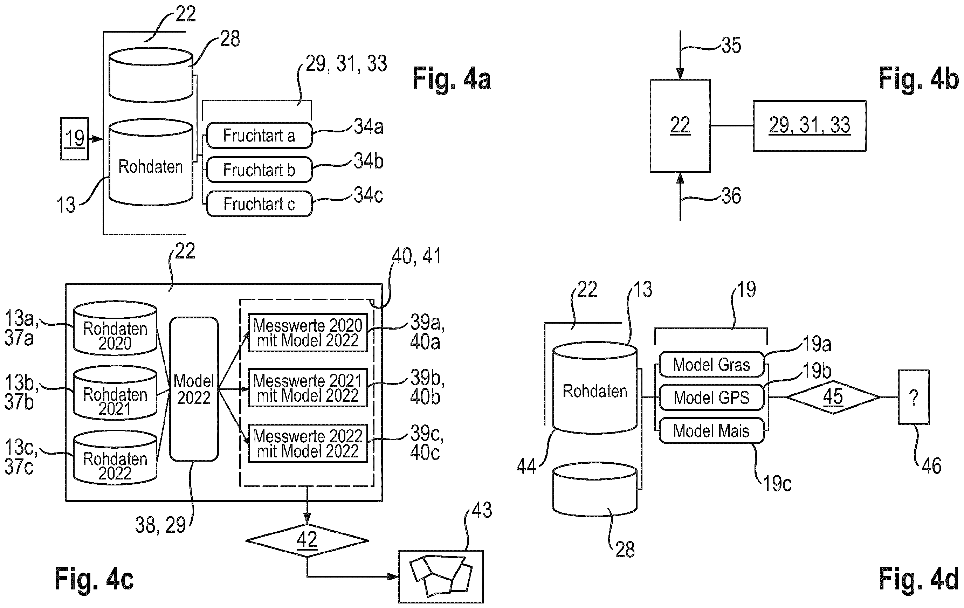

Gemäß Figur 4a kann mittels der erfindungsgemäßen Datenbankstruktur 22 ein Kalibrierungsmodell 19 derart in ein nutzerspezifisches Kalibrierungsmodell 29 unter Verwendung der hinterlegten Rohdaten 13 und/oder der hinterlegten Kalibrierungsmodell 28 modifizieren werden, dass für jeweils eine spezielle Fruchtart 34a..i ein angepasstes Kalibrierungsmodell 29, 31, 33 abgeleitet wird.

Vor dem Hintergrund, dass die Weiter- oder Neuentwicklung von Fruchtarten 35 und sich ändernde Umgebungsbedingungen 36 Einfluss auf die Sensiergenauigkeit der NIR-Sensorsysteme 14 haben, kann die erfindungsgemäße Datenbankstruktur 22 gemäß Figur 4b eingerichtet sein, ein angepasstes nutzerspezifisches Kalibrierungsmodell 29, 31, 33 unter Berücksichtigung der geänderten Umgebungsbedingungen 36 und/oder der neuentwickelten Fruchtarten 36 zu erstellen.

Zudem kann die erfindungsgemäße Datenbankstruktur 22 gemäß Figur 4c auch so beschaffen sein, dass Rohdaten 13a..c unterschiedlicher Einsatzzeiten 37 miteinander verglichen werden indem für alle Einsatzzeiten 37a..c dasselbe Kalibrierungsmodell 38 berücksichtigt wird, wobei dasselbe Kalibrierungsmodell 38 eines der bereits beschriebenen nutzerspezifischen Kalibrierungsmodelle 29 sein kann. Auf diese Weise generiert die Datenbankstruktur 22 Messwerte 39a..c, welche die Inhaltsstoffe 18 des jeweiligen Pflanzenmaterials 16 eines bestimmten Zeitraums 40a..c normiert auf das zugrunde gelegte gemeinsame Kalibrierungsmodell 38. In einer nutzerrelevanten Ausgestaltung umfasst der Zeitraum 40 jeweils eine Kampagne 41, wobei Kampagne hier eine Erntekampagne, eine Düngekampagne oder dergleichen umfassen kann. Der Vergleich 42 der auf die beschriebene Weise normierten Rohdaten 13a..c wird schließlich dazu genutzt, sogenannte an sich bekannte Feldkarten 43 zu korrigieren, hier und vorzugsweise handelt es sich bei den Feldkarten 43 um Ertragskarten oder Düngekarten.

In einer weiteren vorteilhaften Ausgestaltung der Erfindung gemäß Figur 4d kann die erfindungsgemäße Datenbankstruktur 22 neben den Rohdaten 13 und den hinterlegten Kalibriermodellen 28 einen sogenannten APDI-Modul 44 umfassen, wobei APDI für "automatische Prozessdateninterpretation" steht und technisch bedeutet, dass die ermittelten Rohdaten 13 auf Plausibilität 45 geprüft werden. In einer nutzerrelevanten Ausgestaltung wird mittels des APDI-Moduls 44 und unter Berücksichtigung des auf der jeweiligen Erntemaschine 1 gewählten Kalibrierungsmodells 19, hier beispielsweise das Kalibriermodell "Gras" 19a oder "Ganzpflanzensilage" 19b oder "Mais" 19c, und der zugehörigen Rohdaten 13 überprüft, ob der Nutzer 30, hier der Bediener, der Fahrer der landwirtschaftlichen Arbeitsmaschine 1, eine Fehleingaben 46 getätigt hat. Im einfachsten Fall kann die Fehleingabe 46 die Eingabe der falschen Gutart bei gewähltem Kalibriermodell 19a..c betreffen.

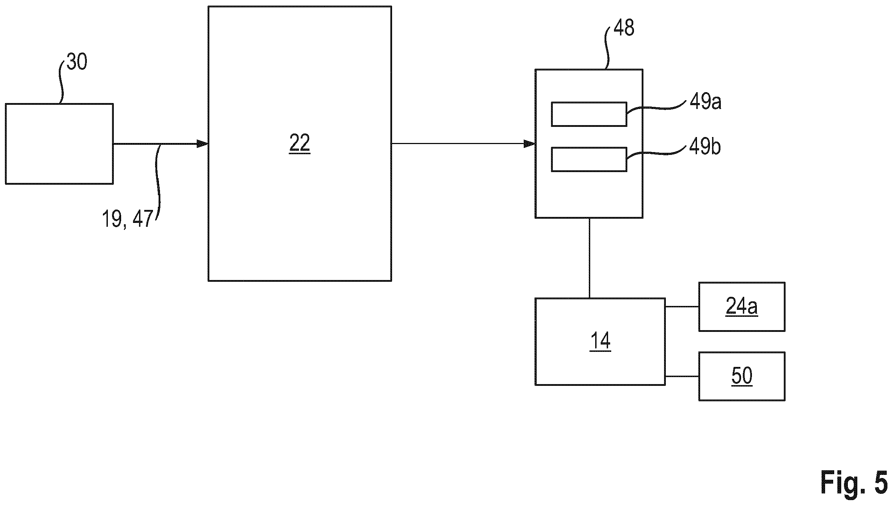

Weiter kann die erfindungsgemäße Datenbankstruktur 22 gemäß Figur 5 so beschaffen sein, dass der Nutzer 30 ein Basiskalibrierungsmodell 47, welches im einfachsten Fall das auf der landwirtschaftlichen Arbeitsmaschine 1 eingesetzte Kalibrierungsmodell 19 ist an die erfindungsgemäße Datenbankstruktur 22 übermittelt. Mittels der Datenbankstruktur 22 wird das übergebene Kalibrierungsmodell 19, das Basiskalibriermodel 47, in ein erweitertes Kalibrierungsmodell 48 umgewandelt, wobei das erweiterte Kalibrierungsmodul 48 dann Modellbestandteile 49a, b umfasst, die das jeweilige NIR-Sensorsystem 14 befähigen ein erweitertes Spektrum an Stoffstromeigenschaften zu ermitteln. Beispielsweise kann die landwirtschaftliche Arbeitsmaschine 1 mit einem NIR-Sensorsystem 14 ausgestattet sein, welches nur den Modul Detektion Trockenmasse 24a (Figur 2) umfasst. Dann kann der Nutzer 30 mittels der Datenbankstruktur 22 in der beschriebenen Weise weiter Funktion, beispielsweise die Bestimmung weiterer Inhaltsstoffe 50, in sein Kalibrierungsmodell 19 integrieren.

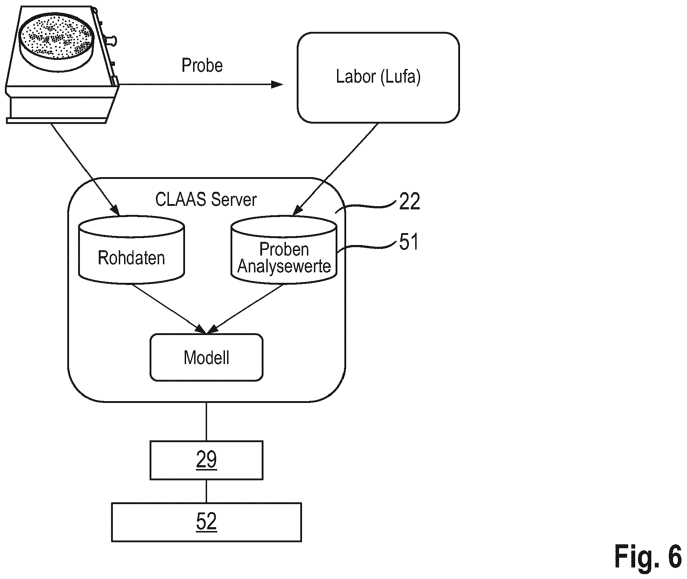

Um die Qualität der durch die Datenbankstruktur 22 zu generierenden nutzerspezifischen Kalibrierungsmodelle 29 weiter zu erhöhen kann die Datenbankstruktur 22 zudem so eingerichtet sein, dass gemäß Figur 6 stationär ermittelte Probenanalysewerte 51 bei der Generierung des jeweiligen nutzerspezifischen Kalibrierungsmodells 29 berücksichtigt werden. Zudem kann die Datenbankstruktur 22 so eingerichtet sein, dass die Erstellung der nutzerspezifischen Kalibrierungsmodelle 29 entgeltlich erfolgt, wobei der Nutzer 30 in Abhängigkeit vom Umfang der Erstellung des jeweiligen Kalibrierungsmodells 29 einmalig oder benutzungsabhängig ein Entgelt 52 entrichtet.

### Bezugszeichenliste:

| | | | |
|---|---|---|---|
| 1 | landwirtschaftliche Arbeitsmaschine | 31 | optimiertes Kalibrierungsmodell |
| 2 | Feldhäcksler | 32 | Anwendungsfall |
| 3 | Feld | 33 | neuerstelltes Kalibrierungsmodell |
| 4 | Pflanzenbestand | 34 | Fruchtart |
| 5 | Transportfahrzeug | 35 | neuentwickelte Fruchtart |
| 6 | Schnittstelle | 36 | geänderte Umweltbedingungen |
| 7 | Daten | 37 | Einsatzzeit |
| 8 | Extern | 38 | Kalibrierungsmodell |
| 9 | Satellit | 39 | Messwert |
| 10 | stationäre Funkanlage | 40 | Zeitraum |
| 11 | Server | 41 | Kampagne |
| 12 | Cloud | 42 | Vergleich |
| 13 | Rohdaten | 43 | Feldkarte |
| 14 | NIR-Sensorsystem | 44 | APDI-Modul |
| 15 | NIR-Sensorkopf | 45 | Prüfung Plausibilität |
| 16 | Pflanzenmaterial | 46 | Prüfung Fehleingabe |
| 17 | Sensierbereich | 47 | Basiskalibrierungsmodell |
| 18 | Inhaltstoffe | 48 | erweitertes Kalibrierungsmodell |
| 19 | Kalibrierungsmodell | 49 | Modellbestandteile |
| 20 | Spektraldaten | 50 | weitere Inhaltsstoffe |
| 21 | Auswerteinheit | 51 | Probenanalysewert |
| 22 | Datenbankstruktur | 52 | Entgelt |
| 23 | Sensorsoftware | | |
| 24 | Kalibrierungsmodell | | |
| 25 | Sensordaten | | |
| 26 | Betriebsparameter | | |
| 27 | Datenverarbeitungseinheit | | |
| 28 | Kalibrierungsmodell | | |
| 29 | nutzerspezifisches Kalibrierungsmodell | | |
| 30 | Nutzer | | |

## Patentansprüche

1. Nutzung einer Datenbankstruktur zur Erstellung von Kalibrierungsmodellen für ein NIR-Sensorsystem einer landwirtschaftlichen Arbeitsmaschine, wobei die Datenbankstruktur Rohdaten der NIR-Spektren von Pflanzenmaterial und/oder Stoffströmen umfasst, die Rohdaten von einem oder mehreren einer landwirtschaftlichen Arbeitsmaschine zugeordneten NIR-Sensorsystemen generiert werden, wobei die Rohdaten (6) unverarbeitete Spektraldaten (20) sind, wobei das oder die NIR-Sensorsysteme eingerichtet sind, mittels einer Schnittstelle für den Datenverkehr mit wenigstens einer Datenverarbeitungseinheit außerhalb der landwirtschaftlichen Arbeitsmaschine die Rohdaten zu übertragen,
**dadurch gekennzeichnet, dass**
die Datenbankstruktur (22) neben den Rohdaten (13) zumindest ein oder mehrere Kalibrierungsmodelle (28) umfasst und eingerichtet ist, nutzerspezifische Kalibrierungsmodelle (29) unter Verwendung der hinterlegten Rohdaten (13) und Kalibrierungsmodelle (28) zu generieren und diese einem Nutzer (30), der eine Steuer- und Regeleinrichtung der landwirtschaftlichen Arbeitsmaschine (1) ist, verfügbar zu machen.

2. Nutzung einer Datenbankstruktur zur Erstellung von Kalibrierungsmodellen nach Anspruch 1,
**dadurch gekennzeichnet, dass**
der Nutzer (30) ein Kalibrierungsmodell (19) zur Verfügung stellt und die Datenbankstruktur (22) unter Berücksichtigung der hinterlegten Rohdaten (13) und/oder Kalibrierungsmodelle (28) ein optimiertes Kalibrierungsmodell (31) erstellt.

3. Nutzung einer Datenbankstruktur zur Erstellung von Kalibrierungsmodellen nach Anspruch 1,
**dadurch gekennzeichnet, dass**
der Nutzer (30) einen Anwendungsfall (32) definiert und die Datenbankstruktur (22) unter Berücksichtigung zumindest der hinterlegten Kalibrierungsmodelle (28) und Rohdaten (13) ein nutzerspezifisches neu erstelltes Kalibrierungsmodell (33) generiert.

4. Nutzung einer Datenbankstruktur zur Erstellung von Kalibrierungsmodellen nach einem der vorhergehenden Ansprüche,
**dadurch gekennzeichnet, dass**
die Datenbankstruktur (22) das erstellte nutzerspezifische Kalibrierungsmodell (29, 31, 33) an den jeweiligen Nutzer (30) übermittelt, vorzugsweise an das der jeweiligen landwirtschaftlichen Arbeitsmaschine (1) zugeordnete NIR-Sensorsystem (14).

5. Nutzung einer Datenbankstruktur zur Erstellung von Kalibrierungsmodellen nach einem der vorhergehenden Ansprüche,
**dadurch gekennzeichnet, dass**
der Nutzer (30) das von der Datenbankstruktur (22) erstellte nutzerspezifische Kalibrierungsmodell (29, 31, 33) abruft und an das jeweilige einer landwirtschaftlichen Arbeitsmaschine (1) zugeordneten NIR-Sensorsystem (14) übergibt.

6. Nutzung einer Datenbankstruktur zur Erstellung von Kalibrierungsmodellen nach einem der vorhergehenden Ansprüche,
**dadurch gekennzeichnet, dass**
die Datenbankstruktur (22) eingerichtet ist ein Kalibrierungsmodell (19) derart zu modifizieren, dass für jeweils eine spezielle Fruchtart (34) ein angepasstes Kalibrierungsmodell (29, 31, 33) abgeleitet wird.

7. Nutzung einer Datenbankstruktur zur Erstellung von Kalibrierungsmodellen nach einem der vorhergehenden Ansprüche,
**dadurch gekennzeichnet, dass**
die Datenbankstruktur (22) eingerichtet ist ein angepasstes Kalibrierungsmodell (29, 31, 33) unter Berücksichtigung geänderter Umgebungsbedingungen (36) und/oder sich ändernder Fruchtarteigenschaften (35) zu erstellen.

8. Nutzung einer Datenbankstruktur zur Erstellung von Kalibrierungsmodellen nach einem der vorhergehenden Ansprüche,
**dadurch gekennzeichnet, dass**
die Rohdaten (13) unterschiedlicher Einsatzzeiten (37) miteinander verglichen werden indem für alle Einsatzzeiten (37a..c) dasselbe Kalibrierungsmodell (29, 38) berücksichtigt wird.

9. Nutzung einer Datenbankstruktur zur Erstellung von Kalibrierungsmodellen nach Anspruch 8,
**dadurch gekennzeichnet, dass**
die Einsatzzeit (37) eine Kampagne (41) umfasst und wobei der Vergleich (42) genutzt wird abgeleitete Feldkarten (43) zu korrigieren.

10. Nutzung einer Datenbankstruktur zur Erstellung von Kalibrierungsmodellen nach einem der vorhergehenden Ansprüche,
**dadurch gekennzeichnet, dass**
die Datenbankstruktur (22) einen APDI-Modul (44) umfasst, der eingerichtet ist unter Berücksichtigung des gewählten Kalibrierungsmodells (19) und der zugehörigen Rohdaten (13) Fehleingaben eines Bedieners zu erkennen und zu korrigieren, wobei "APDI" für "automatische Prozessdateninteipretation" steht.

11. Nutzung einer Datenbankstruktur zur Erstellung von Kalibrierungsmodellen nach Anspruch 10,
**dadurch gekennzeichnet, dass**
eine Fehleingabe die Eingabe der falschen Fruchtart (34) ist.

12. Nutzung einer Datenbankstruktur zur Erstellung von Kalibrierungsmodellen nach einem der vorhergehenden Ansprüche,
**dadurch gekennzeichnet, dass**
der Nutzer (30) ein Basiskalibrierungsmodell (47) mittels der Datenbankstruktur (22) in ein erweitertes Kalibrierungsmodell (48) wandeln kann, wobei das erweiterte Kalibrierungsmodul (48) dann Modellbestandteile (49) umfasst, die das jeweilige NIR-Sensorsystem (14) befähigen, ein erweitertes Spektrum (20) an Inhaltsstoffen (18) zu ermitteln.

13. Nutzung einer Datenbankstruktur zur Erstellung von Kalibrierungsmodellen nach einem der vorhergehenden Ansprüche,
**dadurch gekennzeichnet, dass**
die Datenbankstruktur (22) eingerichtet ist stationär ermittelte Probenanalysewerte (51) bei der Generierung des jeweiligen Kalibrierungsmodells (28, 31, 33) zu berücksichtigen.

14. Nutzung einer Datenbankstruktur zur Erstellung von Kalibrierungsmodellen nach einem der vorhergehenden Ansprüche,
**dadurch gekennzeichnet, dass**
die Datenbankstruktur (22) eingerichtet ist die Erstellung der nutzerspezifischen Kalibrierungsmodelle (29) entgeltlich vorzunehmen, wobei der Nutzer (30) in Abhängigkeit vom Umfang der Erstellung des jeweiligen Kalibrierungsmodells (29) einmalig oder benutzungsabhängig ein Entgelt (52) entrichtet.

15. Landwirtschaftliche Arbeitsmaschine zur Nutzung der Datenbankstruktur nach Anspruch 1,
**dadurch gekennzeichnet, dass**
die landwirtschaftliche Arbeitsmaschine (1) ein NIR-Sensorsystem (14) umfasst, das eingerichtet ist, um NIR-Spektren (20) von Pflanzenmaterial und/oder sonstigen Stoffen zu erfassen und als Rohdaten (13) auszugeben, einer Auswerteeinheit (21) zum Ableiten wenigstens eines Parameters des Pflanzenmaterials und/oder sonstigen Stoffs in Echtzeit aus den Rohdaten (13), und einer Schnittstelle (6) für den Datenverkehr mit wenigstens einer Datenverarbeitungseinheit (27) außerhalb der landwirtschaftlichen Arbeitsmaschine (1), wobei die Datenverarbeitungseinheit (27) eine Datenbankstruktur (22) zur Erstellung von Kalibrierungsmodellen (29) für ein NIR-Sensorsystem (14) umfasst und die Datenbankstruktur (22) Rohdaten (13) der NIR-Spektren (20) von Pflanzenmaterial und/oder sonstigen Stoffen umfasst, die Rohdaten (13) von einem oder mehreren der landwirtschaftlichen Arbeitsmaschine (1) zugeordneten NIR-Sensorsystemen (14) generiert werden, die Datenbankstruktur (22) neben den Rohdaten (13) zumindest ein oder mehrere Kalibrierungsmodelle (28) umfasst und eingerichtet ist, nutzerspezifische Kalibrierungsmodelle (29) unter Verwendung der hinterlegten Rohdaten (13) und Kalibrierungsmodelle (28) zu generieren und diese einem Nutzer (30) verfügbar zu machen.

16. Landwirtschaftliche Arbeitsmaschine nach Anspruch 15,
**dadurch gekennzeichnet, dass**
das NIR-Sensorsystem (14) die Rohdaten (13) generiert und an die Datenbankstruktur (22) überträgt, wobei das NIR-Sensorsystem (14) einen oder mehrere Sensorköpfe (15) umfasst und jedem Sensorkopf (15) separate oder allen Sensorköpfen (15) eine gemeinsame Auswerteinheit (21) zugeordnet ist und die Auswerteinheit (21) eine Sensorsoftware (23) umfasst, wobei die vom Sensorkopf (15) generierten Spektraldaten (20) mittels der Sensorsoftware (23) und dem oder den dieser Sensorsoftware (23) zugeordneten Kalibrierungsmodellen (19) in Sensordaten (25) zur internen Nutzung in der landwirtschaftlichen Arbeitsmaschine (1) und zu den Rohdaten (13) weiterverarbeitet werden.

17. Landwirtschaftliche Arbeitsmaschine nach Anspruch 16
**dadurch gekennzeichnet, dass**
die in der jeweiligen Auswerteinheit (21) generierten Rohdaten (13) mittels einer Schnittstelle (6) nach Extern (8) übertragen werden, wobei die Datenübertragungsstrecken zwischen landwirtschaftlicher Arbeitsmaschine (1) und Datenbankstruktur (22) zumindest einen Satellit (9) und/oder eine Funkanlage (10) umfasst und die Datenbankstruktur (22) in einer vorzugsweise als Datencloud (12) oder stationärer Server (11) ausgeführten Datenverarbeitungseinrichtung (27) hinterlegt ist.

## Claims

1. Use of a database structure for the preparation of calibration models for a NIR sensor system of an agricultural working machine, wherein the database structure comprises raw data from the NIR spectra of plant material and/or flows of material, the raw data are generated from one or more NIR sensor systems associated with an agricultural working machine, wherein the raw data (6) are unprocessed spectral data (20), wherein the NIR sensor system or systems are configured to transfer the raw data outside the agricultural working machine by means of an interface for the communication of data with at least one data processing unit,
**characterized in that**
the database structure (22) comprises at least one or more calibration models (28) in addition to the raw data (13) and is configured to generate user-specific calibration models (29) using the stored raw data (13) and calibration models (28) and to make them available to a user (30), which is a controlling and regulating device of the agricultural working machine (1).

2. Use of a database structure for the preparation of calibration models according to claim 1,
**characterized in that**
the user (30) provides a calibration model (19) and the database structure (22) prepares an optimised calibration model (31) taking the stored raw data (13) and/or calibration models (28) into consideration.

3. Use of a database structure for the preparation of calibration models according to claim 1,
**characterized in that**
the user (30) defines an application (32) and the database structure (22) generates a user-specific, newly prepared calibration model (33) taking at least the stored calibration models (28) and raw data (13) into consideration.

4. Use of a database structure for the preparation of calibration models according to one of the preceding claims,
**characterized in that**
the database structure (22) communicates the prepared user-specific calibration model (29, 31, 33) to the respective user (30), preferably to the NIR sensor system (14) associated with the respective agricultural working machine (1).

5. Use of a database structure for the preparation of calibration models according to one of the preceding claims,
**characterized in that**
the user (30) retrieves the user-specific calibration model (29, 31, 33) prepared by the database structure (22) and delivers it to the respective NIR sensor system (14) associated with an agricultural working machine (1).

6. Use of a database structure for the preparation of calibration models according to one of the preceding claims,
**characterized in that**
the database structure (22) is configured to modify a calibration model (19) in a manner such that an adapted calibration model (29, 31, 33) is derived for each particular crop type (34).

7. Use of a database structure for the preparation of calibration models according to one of the preceding claims,
**characterized in that**
the database structure (22) is configured to prepare an adapted calibration model (29, 31, 33) taking into consideration changed environmental conditions (36) and/or changing crop type properties (35).

8. Use of a database structure for the preparation of calibration models according to one of the preceding claims,
**characterized in that**
the raw data (13) from different operating times (37) are compared with each other, in which the same calibration model (29, 38) is taken into consideration for all operating times (37a..c).

9. Use of a database structure for the preparation of calibration models according to claim 8,
**characterized in that**
the operating time (37) comprises a campaign (41) and wherein the comparison (42) is used to correct derived field maps (43).

10. Use of a database structure for the preparation of calibration models according to one of the preceding claims,
**characterized in that**
the database structure (22) comprises an APDI module which is configured, taking the selected calibration model (19) and the associated raw data (13) into consideration, to detect and correct incorrect inputs from an operator, wherein "APDI" stands for "automatic process data interpretation".

11. Use of a database structure for the preparation of calibration models according to claim 10,
**characterized in that**
an incorrect input is the input of the wrong crop type (34).

12. Use of a database structure for the preparation of calibration models according to one of the preceding claims,
**characterized in that**
the user (30) can convert a basic calibration model (47) into an expanded calibration model (48) by means of the database structure (22), wherein the expanded calibration model (48) then comprises model components (49) which enable the respective NIR sensor system (14) to determine an expanded spectrum (20) of the constituents (18).

13. Use of a database structure for the preparation of calibration models according to one of the preceding claims,
**characterized in that**
the database structure (22) is configured to take stationarily determined sample analysis values (51) into consideration during the generation of the respective calibration model (28, 31, 33).

14. Use of a database structure for the preparation of calibration models according to one of the preceding claims,
**characterized in that**
the database structure (22) is configured to prepare the user-specific calibration models (29) free of charge, wherein the user (30) pays a one-time or usage-dependent fee (52) depending on the amount of preparation for the respective calibration model (29).

15. An agricultural working machine for using the database structure according to claim 1,
**characterized in that**
the agricultural working machine (1) comprises a NIR sensor system (14) which is configured to detect NIR spectra (20) of plant material and/or other materials and to output them, as raw data (13), to an evaluation unit (21) in order to derive at least one parameter of the plant material and/or other material in real time from the raw data (13), to an interface (6) for the communication of data with at least one data processing unit (27) outside the agricultural working machine (1), wherein the data processing unit (27) comprises a database structure (22) for the preparation of calibration models (29) for a NIR sensor system (14) and the database structure (22) comprises raw data (13) for the NIR spectra (20) of plant material and/or other materials, the raw data (13) are generated from one or more NIR sensor systems (14) associated with the agricultural working machine (1), the database structure (22) comprises at least one or more calibration models (28) in addition to the raw data (13) and is configured to generate user-specific calibration models (29) using the stored raw data (13) and calibration models (28) and to make them available to a user (30).

16. The agricultural working machine according to claim 15,
**characterized in that**
the NIR sensor system (14) generates the raw data (13) and transfers it to the database structure (22), wherein the NIR sensor system (14) comprises one or more sensor heads (15) and a common evaluation unit (21) is associated with each separate sensor head (15) or all sensor heads (15) and the evaluation unit (21) comprises sensor software (23), wherein the spectral data (20) generated by the sensor head (15) are further processed by means of the sensor software (23) and the calibration model or models (19) associated with this sensor software (23) into sensor data (25) for internal use in the agricultural working machine (1) and into the raw data (13).

17. The agricultural working machine according to claim 16,
**characterized in that**
the raw data (13) generated in the respective evaluation unit (21) are transferred to the outside (8) by means of an interface (6), wherein the data transfer pathways between agricultural working machine (1) and database structure (22) comprise at least one satellite (9) and/or radio equipment (10) and the database structure (22) is stored in a data processing unit (27) preferably configured as a data cloud (12) or stationary server (11).

## Revendications

1. Utilisation d'une structure de base de données aux fins de création de modèles d'étalonnage pour un système de capteur NIR d'un engin de travail agricole, la structure de base de données comprenant des données brutes des spectres NIR de matières végétales et/ou de flux de matières, les données brutes étant générées par un ou plusieurs systèmes de capteur NIR associés à un engin de travail agricole, les données brutes (6) étant des données spectrales (20) non traitées, le ou les systèmes de capteur NIR étant conçus pour transmettre les données brutes au moyen d'une interface pour l'échange de données avec au moins une unité de traitement de données à l'extérieur de l'engin de travail agricole,
**caractérisée en ce que**
la structure de base de données (22) comprend, outre les données brutes (13), au moins un ou plusieurs modèles d'étalonnage (28) et est conçue pour générer des modèles d'étalonnage spécifiques à un utilisateur (29), en utilisant les données brutes (13) et les modèles d'étalonnage (28) enregistrés, et pour les mettre à la disposition d'un utilisateur (30) qui est un dispositif de commande et de régulation de l'engin de travail agricole (1).

2. Utilisation d'une structure de base de données aux fins de création de modèles d'étalonnage selon la revendication 1, **caractérisée en ce que** l'utilisateur (30) met à disposition un modèle d'étalonnage (19), et la structure de base de données (22) crée un modèle d'étalonnage optimisé (31), en tenant compte des données brutes (13) et/ou modèles d'étalonnage (28) enregistrés.

3. Utilisation d'une structure de base de données aux fins de création de modèles d'étalonnage selon la revendication 1, **caractérisée en ce que** l'utilisateur (30) définit un cas d'application (32), et la structure de base de données (22) génère un modèle d'étalonnage (33) nouvellement créé, spécifique à l'utilisateur, en tenant compte au moins des modèles d'étalonnage (28) et des données brutes (13) enregistrés.

4. Utilisation d'une structure de base de données aux fins de création de modèles d'étalonnage selon une des revendications précédentes, **caractérisée en ce que** la structure de base de données (22) transmet à l'utilisateur (30) respectif le modèle d'étalonnage spécifique à l'utilisateur (29, 31, 33) créé, de préférence au système de capteur NIR (14) associé à l'engin de travail agricole (1) respectif.

5. Utilisation d'une structure de base de données aux fins de création de modèles d'étalonnage selon une des revendications précédentes, **caractérisée en ce que** l'utilisateur (30) récupère le modèle d'étalonnage spécifique à l'utilisateur (29, 31, 33) créé par la structure de base de données (22) et le transmet au système de capteur NIR (14) respectif associé à un engin de travail agricole (1).

6. Utilisation d'une structure de base de données aux fins de création de modèles d'étalonnage selon une des revendications précédentes, **caractérisée en ce que** la structure de base de données (22) est conçue pour modifier un modèle d'étalonnage (19) de manière à ce qu'un modèle d'étalonnage (29, 31, 33) adapté soit dérivé respectivement pour un type de culture (34) spécifique.

7. Utilisation d'une structure de base de données aux fins de création de modèles d'étalonnage selon une des revendications précédentes, **caractérisée en ce que** la structure de base de données (22) est conçue pour créer un modèle d'étalonnage (29, 31, 33) adapté, en tenant compte de conditions ambiantes modifiées (36) et/ou de propriétés variables (35) du type de culture.

8. Utilisation d'une structure de base de données aux fins de création de modèles d'étalonnage selon une des revendications précédentes, **caractérisée en ce que** les données brutes (13) de différentes périodes de fonctionnement (37) sont comparées entre elles, en tenant compte du même modèle d'étalonnage (29, 38) pour l'ensemble des périodes de fonctionnement (37a...c).

9. Utilisation d'une structure de base de données aux fins de création de modèles d'étalonnage selon la revendication 8, **caractérisée en ce que** la période de fonctionnement (37) comprend une campagne (41), et sachant que la comparaison (42) est utilisée pour corriger des cartes de champ (43) dérivées.

10. Utilisation d'une structure de base de données aux fins de création de modèles d'étalonnage selon une des revendications précédentes, **caractérisée en ce que** la structure de base de données (22) comprend un module APDI (44) qui est conçu pour détecter et corriger des erreurs de saisie d'un opérateur, en tenant compte du modèle d'étalonnage (19) choisi et des données brutes (13) associées, « APDI » signifiant « interprétation automatique de données de processus ».

11. Utilisation d'une structure de base de données aux fins de création de modèles d'étalonnage selon la revendication 10, **caractérisée en ce qu'**une erreur de saisie est la saisie d'un type de culture (34) incorrect.

12. Utilisation d'une structure de base de données aux fins de création de modèles d'étalonnage selon une des revendications précédentes, **caractérisée en ce que** l'utilisateur (30) peut convertir un modèle d'étalonnage de base (47) en un modèle d'étalonnage étendu (48) à l'aide de la structure de base de données (22), le module d'étalonnage étendu (48) comprenant ensuite des composantes de modèle (49) qui permettent au système de capteur NIR (14) respectif de déterminer un spectre (20) étendu de constituants (18).

13. Utilisation d'une structure de base de données aux fins de création de modèles d'étalonnage selon une des revendications précédentes, **caractérisée en ce que** la structure de base de données (22) est conçue pour prendre en compte des valeurs d'analyse d'échantillon (51), déterminées de manière stationnaire, lors de la génération du modèle d'étalonnage (28, 31, 33) respectif.

14. Utilisation d'une structure de base de données aux fins de création de modèles d'étalonnage selon une des revendications précédentes, **caractérisée en ce que** la structure de base de données (22) est conçue pour procéder à la création payante des modèles d'étalonnage spécifiques à l'utilisateur (29), l'utilisateur (30) payant des frais (52) en fonction du volume de création du modèle d'étalonnage (29) respectif, en une seule fois ou en fonction de l'utilisation.

15. Engin de travail agricole pour l'utilisation de la structure de base selon la revendication 1, **caractérisé en ce que** l'engin de travail agricole (1) comprend un système de capteur NIR (14) qui est conçu pour recueillir des spectres NIR (20) de matières végétales et/ou d'autres matières et pour les délivrer sous forme de données brutes (13), une unité d'évaluation (21) destinée à dériver en temps réel au moins un paramètre de la matière végétale et/ou d'une autre matière à partir des données brutes (13), et une interface (6) pour l'échange de données avec au moins une unité de traitement de données (27) à l'extérieur de l'engin de travail agricole (1), l'unité de traitement de données (27) comprenant une structure de base de données (22) destinée à créer des modèles d'étalonnage (29) pour un système de capteur NIR (14), et la structure de base de données (22) comprenant des données brutes (13) des spectres de capteur NIR (14) de matières végétales et/ou d'autres matières, les données brutes (13) étant générées par un ou plusieurs de systèmes de capteur NIR (14) associés à l'engin de travail agricole (1), la structure de base de données (22) comprenant, outre les données brutes (13), au moins un ou plusieurs modèles d'étalonnage (28) et étant conçue pour générer des modèles d'étalonnage spécifiques à un utilisateur (29), en utilisant les données brutes (13) et les modèles d'étalonnage (28) enregistrés, et pour les mettre à la disposition d'un utilisateur (30).

16. Engin de travail agricole selon la revendication 15, **caractérisé en ce que** le système de capteur NIR (14) génère les données brutes (13) et les transmet à la structure de base de données (22), le système de capteur NIR (14) comprenant une ou plusieurs têtes de capteur (15), et des unités d'évaluation (21) séparées étant associées à chaque tête de capteur (15) ou une unité d'évaluation (21) commune étant associée à l'ensemble des têtes de capteur (15), et l'unité d'évaluation (21) comprenant un logiciel de capteur (23), les données spectrales (20) générées par la tête de capteur (15) faisant l'objet d'un traitement ultérieur par le logiciel de capteur (23) et le ou les modèle(s) d'étalonnage (19) associé(s) à ce logiciel de capteur (23), pour les convertir en données de capteur (25), en vue de l'utilisation interne dans l'engin de travail agricole (1), et en données brutes (13).

17. Engin de travail agricole selon la revendication 16, **caractérisé en ce que** les données brutes (13) générées dans l'unité d'évaluation (21) respective sont transmises vers l'extérieur (8) au moyen d'une interface (6), les voies de transmission de données entre l'engin de travail agricole (1) et la structure de base de données (22) comprenant au moins un satellite (9) et/ou une installation de radiocommunication (10), et la structure de base de données (22) étant enregistrée dans un dispositif de traitement de données (27) réalisé de préférence sous forme de cloud de données (12) ou de serveur stationnaire (11).
